(19) **Europäisches Patentamt**
**European Patent Office**
**Office européen des brevets**

(11) **EP 2 912 302 B1**

(12) **EUROPEAN PATENT SPECIFICATION**

(45) Date of publication and mention
of the grant of the patent:
**14.12.2016 Bulletin 2016/50**

(51) Int Cl.:
*F02N 11/08* (2006.01)    *F02D 41/22* (2006.01)
*F02N 11/10* (2006.01)

(21) Application number: **13773819.1**

(22) Date of filing: **10.09.2013**

(86) International application number:
**PCT/FI2013/050869**

(87) International publication number:
**WO 2014/064326 (01.05.2014 Gazette 2014/18)**

(54) **A LIQUID DETECTION SYSTEM OF AN INTERNAL CUMBUSTION ENGINE**

FLÜSSIGKEITSDETEKTIONSSYSTEM EINES VERBRENNUNGSMOTORS

SYSTÈME DE DÉTECTION DE LIQUIDE D'UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2012 FI 20126096**

(43) Date of publication of application:
**02.09.2015 Bulletin 2015/36**

(73) Proprietor: **Wärtsilä Finland Oy**
**65380 Vaasa (FI)**

(72) Inventors:
• **ÖSTER, Anders**
**FI-66520 Veikars (FI)**
• **MÄKINEN, Jani**
**FI-60200 Seinäjoki (FI)**

• **HYVÖNEN, Jari**
**FI-65450 Sulva (FI)**
• **ERVASTI, Juhani**
**FI-20320 Turku (FI)**

(74) Representative: **Berggren Oy Ab**
**P.O. Box 16**
**Eteläinen Rautatiekatu 10A**
**00101 Helsinki (FI)**

(56) References cited:
**JP-A- 2009 203 840     US-A- 3 870 954
US-A- 3 927 359     US-A- 6 078 486
US-A1- 2011 202 263     US-B1- 6 202 615
US-B1- 6 661 195**

## Description

### Field of technology

The present invention relates to a liquid detection system of an internal combustion engine.

### Prior art

An internal combustion engine may meet a risk of having liquid in one or more of its cylinders. The liquid such as water may originate from leakage of the cylinder head gasket, and also from other reasons like leaking exhaust valve seat or leaking precombustion chamber gasket in a gas engine. In case of oil leakage, the source may be a leaking diesel fuel injector or lube oil coming from injector cooling circuit or from piston cooling. The liquid in the cylinder, i.e. in the combustion chamber increases the cylinder pressure in the compression stage due to its incompressibility. In the worst case the liquid fills a great part of the cylinder, or even exceeds the volume of the combustion chamber in the top dead centre position of the piston, which causes a powerful pressure stroke in the cylinder, when the engine is rotated, for example, for starting purpose. Such a pressure stroke can incur damages in the cylinder and other engine components, like the cylinder head gasket, the piston, the piston rings, the piston pin, the connecting rod and its bearings, and the crank shaft and its bearings, and also bearing housings.

It is known to check oil or water leakage of a cylinder relying on sense of sight, e.g. an indicator valve or indicator cock which is opened during rotation of the engine. It is also known to use a system having a cylinder specific sensor, for example photoelectric sensor, in connection with the cylinder for indicating the leakage as disclosed in JP 11064147 publication. The cylinder specific detection arrangement is complex to install due to repetitive actions and possible lack of space around the cylinders. It is also known from US3870954 to analyse the current of an electric starter motor during a starting sequence, to detect a locked or seized engine.

Upgrade installations are also complex to existing engines having no leakage detection system.

### Short description

The aim of the invention is to provide an alternative solution to detect liquid in a cylinder/s for eliminating the problems said above. The aim is achieved in a way described in the independent claim. The dependent claims illustrate different embodiments of the invention. A liquid detection system according to the invention for an internal combustion engine detects undesired liquid in one or several cylinders of the engine. The system comprises an electric motor to rotate a crank shaft of the internal combustion engine during a certain period, a frequency converter to supply power to the electric motor, a measuring sensor to measure current of the electric motor, and a control unit to receive measurements of the measuring sensor. The torque measurement can also be incorporated into the frequency converter. The control unit comprises a comparison unit to compare values of the measurements with a threshold value or values. Further, the control unit is arranged to stop the electric motor if the measurement value exceeds the threshold value.

### List of figures

In the following, the invention is described in more detail by reference to the enclosed drawings, where

Figure 1    illustrates an example of the invention,
Figure 2    illustrates another example of the invention,
Figure 3    illustrates yet another example of the invention,
Figure 4    illustrates a flow chart example of a method according to the invention, and
Figure 5    illustrates another example of a method according to the invention.

### Description of the drawings

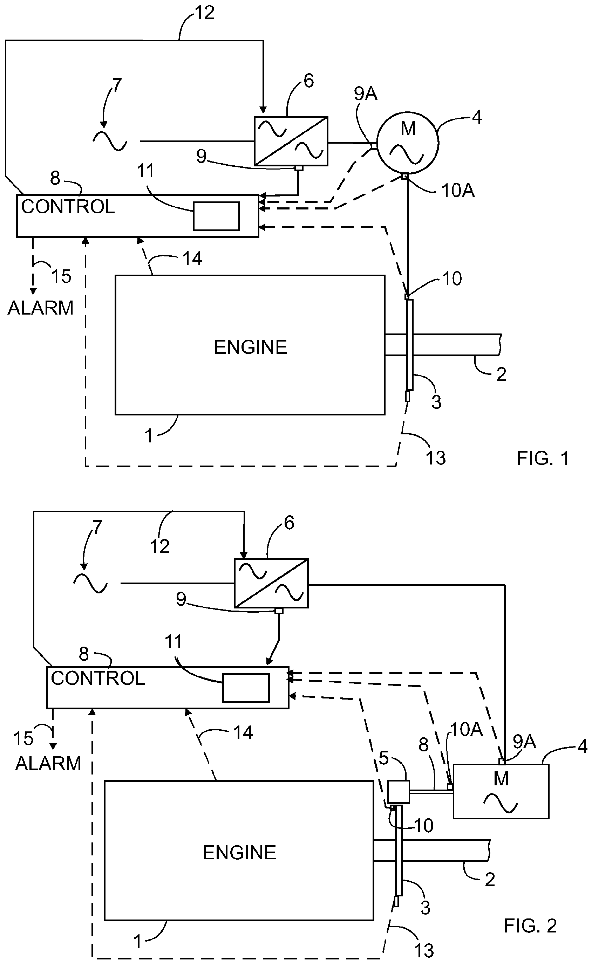

Figure 1 illustrates an example of the inventive system. An electric motor 4 is connected to a flywheel 3 to rotate a crank shaft 2 of an internal combustion engine 1. Alternatively the electric motor can be connected to another toothed wheel driving the crankshaft. So, in this context the word flywheel should be understood broadly. The flywheel is connected to the crank shaft. A frequency converter 6 supplies power from a source 7, like an electric network, to the electric motor 4.

So, the electric motor 4 rotates the crank shaft 2 that in turn moves pistons of the cylinders in the internal combustion engine 1. Liquid, such as water or oil, in one or several cylinders hinders the movement of the piston/s because of weight of water (or oil) and because liquid is incompressible under pressure. Therefore the pressure in the cylinder in the compression phase is higher than it is in normal condition of the cylinder (no extra liquid in the cylinder). This means that more power or torque than normally is required to rotate the crank shaft 2. Therefore the current consumed at a specific voltage and rotational speed by the electric motor 4 is higher than normal. Liquid in t one or several cylinders can be detected, by measuring the current at specific voltage of the electric motor, and/or torque.

The electric motor 4 is not to be designed to run the internal combustion engine 1 at high speed, or to start the engine. The electric motor rotates the engine for detecting liquid in the cylinder/s. So the electric motor can be run before the starting of the internal combustion engine. The rotation speed of the electric motor 4 and the crank shaft 2 can be relatively low at the beginning because the cylinder/s may contain a great amount of liquid, which means that low rotation speed is sufficient for detecting the liquid and react in time during the same compression phase of the cylinder.

After the beginning of the rotation of the engine/electric motor, the rotation speed can be increased gradually, if liquid is not detected at a lower rotation speed. In this way smaller amounts of water can be detected in the cylinder/s. Higher amounts of water cause higher resistance to movement of the piston, which is easier to detect than smaller amounts of water. The frequency converter 6 changes the frequency of the power supply to the electric motor, directly controlling the rotation speed. The rotation speed can be adjusted to different conditions to detect, for example, a certain amount of liquid. So, the use of the frequency converter makes it possible to detect different amounts of liquid in the cylinders without damaging the engine 1, for example by calculating an integral value of the current or torque measurement. The integral value is gradually increasing with increasing amount of water. The more liquid exists, the earlier the value increases and vice versa.

The electric motor is rotated in a certain period. In this period it is possible to detect possible liquid in one or more cylinders. Depending on how many rotations speeds are used for the liquid detection, the period can contain several sub periods for different rotation speeds. The total duration of the period depends on a number of the sub periods. The more sub periods there are, the longer is the period.

Figure 1 shows also a control unit 8 and a measuring sensor 9, 9A to measure current of the electric motor 4. The measuring sensor can be situated on the side of the frequency converter 9 (for example an input or output of the frequency converter) or on the power input 9A of the electric motor. The measuring sensor is connected to the control unit 8 (The connection of the power input sensor 9A is illustrated as a dashed line.) that receives the measurements of the measuring sensor. The control unit comprises a comparison unit 11 that compare values of the measurements with a threshold value. It the measurement value exceeds the threshold value, the control unit is arranged to stop the electric motor. The stopping is convenient to proceed by transmitting a stopping command 12 to the frequency converter 6 that stops the power supply to the electric motor 4.

Torque of the crank shaft 2 can be calculated as well. Liquid in the cylinder can also be detected from the torque value. If the torque value is above normal values, liquid may exist in one or several cylinders. Torque T can be calculated from current of the electric motor and a rotation speed of the crank shaft (or the electric motor) for example by using an equation

$$T = P/w$$

where P is power and w is rotation speed in radians.
P can be calculated from equation

$$P = RI^2$$

where I is current of the electric motor and R is an internal resistance of the electric motor. w can be calculated from equation $w = 2\pi n$, where n is rotations/minute.

Therefore, speed can be measured from the flywheel 3 or alternative from the axis of the electric motor 4. Speed of the electric motor corresponds to the speed of the crankshaft. Therefore the system can also comprise a speed sensor 10, 10A to measure a rotation speed of the electric motor or the crank shaft. The control unit 8 is arranged to receive measurements of the speed sensor 10, 10A, to calculate torque of the crank shaft, and to compare values of the torque measurements with a torque threshold value. In addition, the control unit is arranged to stop the electric motor, if the calculated torque value exceeds the torque threshold value.

The use of two indicators, current and torque, makes the liquid detection more reliable. The control unit 8 is arranged in such a way that if either one of these indicators exceeds an indicator specific threshold, liquid is deemed to be detected.

It is also possible to have an embodiment where both the threshold value and the torque threshold value are required to be exceeded by said measurements and torque calculation to stop the electric motor.

In addition, the control unit 8 of the system comprises engine type information. The above said threshold values depend on the engine type information. The information can be in a table format. The information can also be calculated via nominal compression ratio, engine friction, and rotational speed. In other words reference torque is compared to measured torque at different crank angles. There can be an operation window around the reference torque trace over the crank angle values. The current/torque reference needs to take into account e.g. oil temperature affecting on rotational engine friction. The threshold value can be adaptable.

A practical embodiment is that there are several tables for each rotation speed of the electric motor. The threshold value can, for example, be 115% of a normal current (no extra liquid in the cylinder/s) of the electric motor for said rotation of the crank shaft. Similarly the torque threshold value can, for example, be 115% of a normal torque of the electric motor for said rotation of the crank shaft.

The control unit 9 can also be arranged to calculate angle information of the crank shaft for identifying a cylinder or cylinders having liquid inside. The angle information can be calculated from position measurement 13 of the flywheel (or the other wheel). In some cases a camshaft position measurement 14 is also needed for calculating correct angle information. Angle information is needed to determine piston positions. During the compression phase of the cylinder current/torque can be measured at the crank angle domain continuously or at selected crank angles. A reference current/torque curve over the crank angle domain can be used for comparison of the measured values and the reference values. There can be an operating window around the reference curve. If the comparison reveals abnormal high deviation/s, i.e. a threshold value/s are exceeded, the liquid is detected. The liquid can be detected even at the early phase of the compression phase.

Further, the control unit may also be arranged to provide an alarm 15 when the electric motor is stopped by said exceeding/s.

Figure 2 shows a more practical embodiment according to the invention. In this example the rotating axis 8 of the electric motor 4 is connected to a transmission wheel 5 that is in connection with the flywheel 3 of the crank shaft 2. The transmission wheel 5 transmits rotation power from the electric motor to the flywheel.

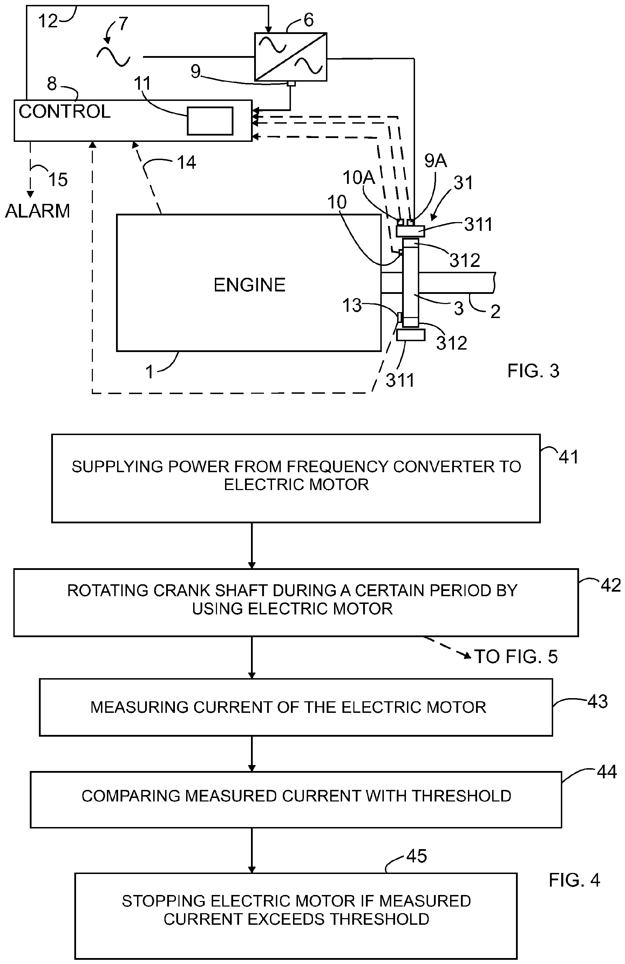

Figure 3 shows another example for connecting the electric motor 31 to the flywheel 3. In this embodiment the flywheel 3 forms a rotor of the electric motor 31. The edge of the flywheel comprises rotor coils 312. The stator 311 of the electric motor is around the edge of the flywheel.

Figure 4 shows an example of a flow chart describing a method according to the invention. The liquid detection method comprises phases for supplying power 41 from a frequency converter to the electric motor; rotating 42 a crank shaft of the internal combustion engine during a certain period by using the electric motor; measuring 43 current of the electric motor; comparing 44 values from the current measuring with a threshold value; and stopping 45 the electric motor if the measurement value exceeds the threshold value.

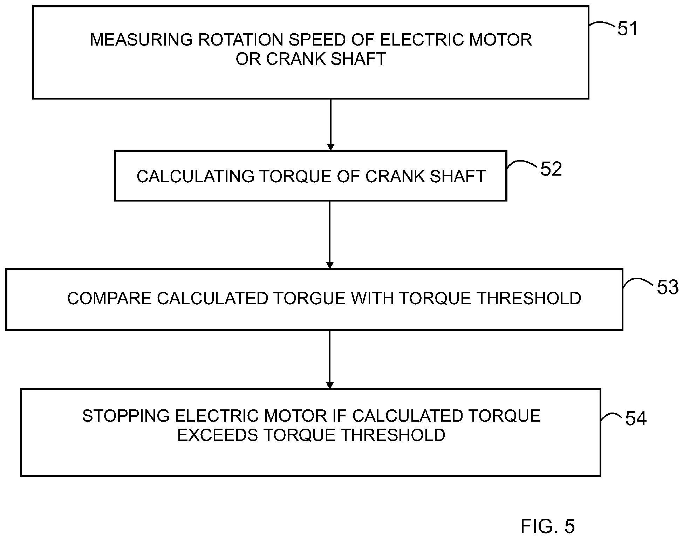

In addition the method can also comprise other phases that are illustrated in the example of figure 5. Figure 5 illustrates phases for measuring 51 a rotation speed of the electric motor 4 or the crank shaft 2; calculating 52 torque of the engine; comparing 53 values of the calculated torque with a torque threshold value; and stopping 54 the electric motor if the calculated torque value exceeds the torque threshold value.

Therefore in one embodiment of the inventive method it is sufficient to stop the electric motor if the current measurement or the calculated torque exceeds the current specific or the torque specific threshold. In another embodiment of the inventive method both the threshold value and the torque threshold value are required to be exceed by said measurements and calculation for stopping the electric motor. In addition, the inventive method may also comprise a phase for calculating angle information of the crank shaft for identifying a cylinder or cylinders having liquid inside. As said above, the angle information is needed to determine piston positions. Further, it is practical that the method comprises also a phase for providing an alarm when the electric motor is stopped by said exceeding/s.

The invention can be realized in many other ways than described above. For example, the control unit can also be a learning control unit. This means that the control unit can learn situations where certain amounts of liquid exist in one or more cylinders. It is evident from the above that the invention is not limited to the embodiments described in this text but can be implemented in many other different embodiments within the scope of the independent claims.

**Claims**

1. A liquid detection system of an internal combustion engine (1) to detect undesired liquid in at least one cylinder of the engine, **characterised in that** the system comprises an electric motor (4) not designed to run the engine at high speed, or to start the engine, which electric motor (4) rotates a crank shaft (2) of the internal combustion engine (1) for detecting liquid in the cylinder/s during a certain period before starting the engine, a frequency converter (6) to supply power to the electric motor, a measuring sensor (9, 9A) to measure current of the electric motor, and a control unit (8) to receive measurements of the measuring sensor, which control unit comprises a comparison unit (11) to compare values of the measurements with a threshold value, the control unit (8) being arranged to detect liquid and to stop the electric motor (4) if the measurement value exceeds the threshold value.

2. A liquid detection system according to Claim 1, **characterised in that** in addition the system comprises a speed sensor (10, 10A) to measure a rotation speed of the electric motor (4) or the crank shaft (2), and the control unit (8) is arranged to receive measurements of the speed sensor (10, 10A), the control unit further being arranged to calculate torque of the crank shaft (2) and to compare values of the torque measurements with a torque threshold value, the control unit (8) being arranged to stop the electric motor (4) if the calculated torque value exceeds the torque threshold value.

3. A liquid detection system according to Claim 2, **characterised in that** both the threshold value and the torque threshold value is required to be exceeded by said measurements and calculation to stop the electric motor (4).

4. A liquid detection system according to any of Claims 1 - 3, **characterised in that** the control unit (8) comprises an engine type information, said values depending on the engine type information.

5. A liquid detection system according to any of the Claims from 1 to 4, **characterised in that** the threshold value is 115% of a normal current of the electric motor (4) for said rotation of the crank shaft (2).

6. A liquid detection system according to any of the Claims from 1 to 4 **characterised in that** the torque threshold value is 115% of a normal torque of the electric motor (4) for said rotation of the crank shaft (2).

7. A liquid detection system according to any of the Claims from 2 to 6, **characterised in that** the control unit (8) is also arranged to calculate angle information of the crank shaft (2) for identifying a cylinder or cylinders having liquid inside.

8. A liquid detection system according to any of the Claims from 1 to 7, **characterised in that** the measuring sensor (9) is arranged to an input or output of the frequency converter (6).

9. A liquid detection system according to any of the Claims from 1 to 7, **characterised in that** the measuring sensor (9A) is arranged to a power input of the electric motor (4).

10. A liquid detection method of an internal combustion engine (1) to detect undesired liquid in at least one cylinder of the engine, **characterised in that** the method comprises phases for
supplying (41) power from a frequency converter (6) to the electric motor (4) not designed to run the engine at high speed, or to start the engine,
rotating (42) a crank shaft (2) of the internal combustion engine (1) before starting of the engine using the electric motor (4) for detecting liquid in the cylinder/s,
measuring (43) current of the electric motor,
comparing (44) values from the current measuring with a threshold value, and detecting liquid and stopping (45) the electric motor (4) if the measurement value exceeds the threshold value.

11. A liquid detection method according to Claim 10, **characterised in that** the method also comprises phases for
measuring (51) a rotation speed of the electric motor (4) or the crank shaft (2), calculating (52) torgue of the crank shaft,
comparing (53) values of the calculated torque with a torque threshold value, and stopping (54) the electric motor (4) if the torque measurement value exceeds the torque threshold value.

12. A liquid detection method according to Claim 11 **characterised in that** in the method both the threshold value and the torque threshold value are required to be exceeded by said measurements and calculation for stopping the electric motor (4).

13. A liquid detection method according to any of the Claims from 10 to 12 **characterised in that** the method comprises also a phase for calculating angle information of the crank shaft (2) for identifying a cylinder or cylinders having liquid inside.

14. A liquid detection method according to Claim 13 **characterised in that** the method comprises also a phase for providing an alarm when the electric motor (4) is stopped by said exceeding/s.

## Patentansprüche

1. Flüssigkeitserkennungssystem einer Brennkraftmaschine (1) zum Erkennen von unerwünschter Flüssigkeit in mindestens einem Zylinder der Kraftmaschine, **dadurch gekennzeichnet, dass** das System einen Elektromotor (4), der nicht zum Betreiben der Kraftmaschine bei hoher Drehzahl oder zum Starten der Kraftmaschine konzipiert ist, wobei der Elektromotor (4) eine Kurbelwelle (2) der Brennkraftmaschine (1) dreht, um Flüssigkeit in dem bzw. den Zylinder(n) während eines bestimmten Zeitraums vor dem Start der Kraftmaschine zu erkennen, einen Frequenzwandler (6) zur Leistungsversorgung des Elektromotors, einen Messsensor (9, 9A) zum Messen des Stroms des Elektromotors und eine Steuereinheit (8) zum Empfangen von Messungen der des Messsensors umfasst, wobei die Steuereinheit eine Vergleichseinheit (11) umfasst, um Werte der Messungen mit einem Schwellenwert zu vergleichen, wobei die Steuereinheit (8) zum Erkennen von Flüssigkeit und Stoppen des Elektromotors (4) ausgelegt ist, falls der Messwert den Schwellenwert überschreitet.

2. Flüssigkeitserkennungssystem nach Anspruch 1, **dadurch gekennzeichnet, dass** das System außerdem einen Drehzahlsensor (10, 10A) zum Messen einer Drehzahl des Elektromotors (4) oder der Kurbelwelle (2) umfasst und die Steuereinheit (8) zum Empfangen von Messungen des Drehzahlsensors (10, 10A) ausgelegt ist, wobei die Steuereinheit ferner zum Berechnen eines Drehmoments der Kurbelwelle (2) und zum Vergleichen von Werten der Drehmomentmessungen mit einem Drehmomentschwellenwert ausgelegt ist, wobei die Steuereinheit (8) zum Stoppen des Elektromotors (4) ausgelegt ist, falls der berechnete Drehmomentwert den Drehmomentschwellenwert überschreitet.

3. Flüssigkeitserkennungssystem nach Anspruch 2, **dadurch gekennzeichnet, dass** sowohl der Schwellenwert als auch der Drehmomentschwellenwert von Messungen und einer Berechnung übertroffen werden müssen, um den Elektromotor (4) zu stoppen.

4. Flüssigkeitserkennungssystem nach einem der Ansprüche 1 bis 3, **dadurch gekennzeichnet, dass** die Steuereinheit (8) Informationen über einen Kraftmaschinentyp umfasst, wobei die Werte von den Informationen des Kraftmaschinentyps abhängen.

5. Flüssigkeitserkennungssystem nach einem der Ansprüche 1 bis 4, **dadurch gekennzeichnet, dass** der Schwellenwert 115 % eines Nennstroms des Elektromotors (4) für die Drehung der Kurbelwelle (2) beträgt.

6. Flüssigkeitserkennungssystem nach einem der Ansprüche 1 bis 4, **dadurch gekennzeichnet, dass** der Drehmomentschwellenwert 115 % eines Nenndrehmoments des Elektromotors (4) für die Drehung der Kurbelwelle (2) beträgt.

7. Flüssigkeitserkennungssystem nach einem der Ansprüche 2 bis 6, **dadurch gekennzeichnet, dass** die Steuereinheit (8) auch zum Berechnen von Winkelinformationen der Kurbelwelle (2) ausgelegt ist, um einen Zylinder oder Zylinder mit Flüssigkeit im Inneren zu identifizieren.

8. Flüssigkeitserkennungssystem nach einem der Ansprüche 1 bis 7, **dadurch gekennzeichnet, dass** der Messsensor (9) für eine Eingabe oder Ausgabe des Frequenzwandlers (6) ausgelegt ist.

9. Flüssigkeitserkennungssystem nach einem der Ansprüche 1 bis 7, **dadurch gekennzeichnet, dass** der Messsensor (9A) für eine Leistungseingabe des Elektromotors (4) ausgelegt ist.

10. Flüssigkeitserkennungsverfahren für eine Brennkraftmaschine (1) zum Erkennen von unerwünschter Flüssigkeit in mindestens einem Zylinder der Kraftmaschine, **dadurch gekennzeichnet, dass** das Verfahren die folgenden Phasen umfasst
Zuführen (41) von Leistung von einem Frequenzwandler (6) zu dem Elektromotor (4), der nicht zum Betreiben der Kraftmaschine bei hoher Drehzahl oder zum Starten der Kraftmaschine konzipiert ist,
Drehen (42) einer Kurbelwelle (2) der Brennkraftmaschine (1) vor dem Starten der Kraftmaschine unter Verwendung des Elektromotors (4), um eine Flüssigkeit in dem bzw. den Zylinder (n) zu erkennen,
Messen (43) von Strom des Elektromotors,
Vergleichen (44) von Werten aus der Strommessung mit einem Schwellenwert, und
Erkennen von Flüssigkeit und Stoppen (45) des Elektromotors (4), falls der Messwert den Schwellenwert überschreitet.

11. Flüssigkeitserkennungsverfahren nach Anspruch 10, **dadurch gekennzeichnet, dass** das Verfahren auch die folgenden Phasen umfasst

Messen (51) einer Drehzahl des Elektromotors (4) oder der Kurbelwelle (2),
Berechnen (52) eines Drehmoments der Kurbelwelle,
Vergleichen (53) von Werten des berechneten Drehmoments mit einem Schwellenwert, und
Stoppen (54) des Elektromotors (4), falls der Drehmomentmesswert den Drehmomentschwellenwert überschreitet.

12. Flüssigkeitserkennungsverfahren nach Anspruch 11, **dadurch gekennzeichnet, dass** in dem Verfahren sowohl der Schwellenwert als auch der Drehmomentschwellenwert von Messungen und einer Berechnung übertroffen werden müssen, um den Elektromotor (4) zu stoppen.

13. Flüssigkeitserkennungsverfahren nach einem der Ansprüche 10 bis 12, **dadurch gekennzeichnet, dass** das Verfahren auch eine Phase zum Berechnen von Winkelinformationen der Kurbelwelle (2) umfasst, um einen Zylinder oder Zylinder mit Flüssigkeit im Inneren zu identifizieren.

14. Flüssigkeitserkennungsverfahren nach Anspruch 13, **dadurch gekennzeichnet, dass** das Verfahren auch eine Phase zum Bereitstellen eines Alarms umfasst, wenn der Elektromotor (4) durch die Überschreitung(en) gestoppt wird.

**Revendications**

1. Système de détection de liquide d'un moteur à combustion interne (1) pour détecter du liquide indésirable dans au moins un cylindre du moteur, **caractérisé en ce que** le système comprend un moteur électrique (4) non conçu pour faire tourner le moteur à une vitesse élevée ou pour démarrer le moteur, lequel moteur électrique (4) fait tourner un vilebrequin (2) du moteur à combustion interne (1) pour détecter du liquide dans le/les cylindre(s) pendant une certaine période avant le démarrage du moteur, un convertisseur de fréquence (6) pour fournir de la puissance au moteur électrique, un capteur de mesure (9, 9A) pour mesurer un courant du moteur électrique, et une unité de commande (8) pour recevoir des mesures du capteur de mesure, laquelle unité de commande comprend une unité de comparaison (11) pour comparer des valeurs des mesures avec une valeur de seuil, l'unité de commande (8) étant étudiée pour détecter du liquide et pour arrêter le moteur électrique (4) si la valeur de mesure dépasse la valeur de seuil.

2. Système de détection de liquide selon la revendication 1, **caractérisé en ce que** le système comprend additionnellement un capteur de vitesse (10, 10A) pour mesurer une vitesse de rotation du moteur électrique (4) ou du vilebrequin (2), et l'unité de commande (8) étant étudiée pour recevoir des mesures du capteur de vitesse (10, 10A), l'unité de commande étant en outre étudiée pour calculer un couple du vilebrequin (2) et pour comparer des valeurs des mesures de couple avec une valeur de seuil de couple, l'unité de commande (8) étant étudiée pour arrêter le moteur électrique (4) si la valeur de couple calculée dépasse la valeur de seuil de couple.

3. Système de détection de liquide selon la revendication 2, **caractérisé en ce que** la valeur de seuil tout comme la valeur de seuil de couple doit être dépassée par lesdites mesures et calculs pour arrêter le moteur électrique (4).

4. Système de détection de liquide selon l'une quelconque des revendications 1 à 3, **caractérisé en ce que** l'unité de commande (8) comprend une information de type de moteur, lesdites valeurs dépendant de l'information de type de moteur.

5. Système de détection de liquide selon l'une quelconque des revendications 1 à 4, **caractérisé en ce que** la valeur de seuil est de 115 % d'un courant normal du moteur électrique (4) pour ladite rotation dudit vilebrequin (2).

6. Système de détection de liquide selon l'une quelconque des revendications 1 à 4, **caractérisé en ce que** la valeur de seuil de couple est de 115 % d'un couple normal du moteur électrique (4) pour ladite rotation du vilebrequin (2).

7. Système de détection de liquide selon l'une quelconque des revendications 2 à 6, **caractérisé en ce que** l'unité de commande (8) est également étudiée pour calculer une information d'angle du vilebrequin (2) pour identifier un cylindre ou des cylindres ayant du liquide à l'intérieur.

8. Système de détection de liquide selon l'une quelconque des revendications 1 à 7, **caractérisé en ce que** le capteur de mesure (9) est disposé à une entrée ou sortie du convertisseur de fréquence (6).

9. Système de détection de liquide selon l'une quelconque des revendications 1 à 7, **caractérisé en ce que** le capteur de mesure (9A) est disposé à une entrée de puissance du moteur électrique (4).

10. Procédé de détection de liquide d'un moteur à combustion interne (1) pour détecter du liquide indésirable dans au moins un cylindre du moteur, **caractérisé en ce que** le procédé comprend des étapes pour fournir (41) de la puissance d'un convertisseur de fréquence (6) au moteur électrique (4) non conçu pour faire tourner le moteur à grande vitesse, ou pour démarrer le moteur,
faire tourner (42) un vilebrequin (2) du moteur à combustion interne (1) avant de démarrer le moteur en utilisant le moteur électrique (4) pour détecter du liquide dans le/les cylindre(s),
mesurer (43) le courant du moteur électrique,
comparer (44) des valeurs de la mesure du courant avec une valeur de seuil, et
détecter du liquide et arrêter (45) le moteur électrique (4) si la valeur de mesure dépasse la valeur de seuil.

11. Procédé de détection de liquide selon la revendication 10, **caractérisé en ce que** le procédé comprend également des étapes pour
mesurer (51) une vitesse de rotation du moteur électrique (4) ou du vilebrequin (2),
calculer (52) un couple du vilebrequin,
comparer (53) des valeurs du couple calculé avec une valeur de seuil de couple, et
arrêter (54) le moteur électrique (4) si la valeur de mesure de couple dépasse la valeur de seuil de couple.

12. Procédé de détection de liquide selon la revendication 11, **caractérisé en ce que**, dans le procédé, la valeur de seuil, tout comme la valeur de seuil de couple doivent être dépassées par lesdites mesures et calculs pour arrêter le moteur électrique (4).

13. Procédé de détection de liquide selon l'une quelconque des revendications 10 à 12, **caractérisé en ce que** le procédé comprend également une étape pour calculer une information d'angle du vilebrequin (2) pour identifier un cylindre ou des cylindres ayant du liquide à l'intérieur.

14. Procédé de détection de liquide selon la revendication 13, **caractérisé en ce que** le procédé comprend également une étape pour fournir une alarme lorsque le moteur électrique (4) est arrêté par ledit ou lesdits dépassement(s).

FIG. 1

FIG. 2

FIG. 3

```
┌─────────────────────────────────────────────────────┐
│ SUPPLYING POWER FROM FREQUENCY CONVERTER TO          │─41
│ ELECTRIC MOTOR                                        │
└─────────────────────────────────────────────────────┘
                          │
                          ▼
┌─────────────────────────────────────────────────────┐
│ ROTATING CRANK SHAFT DURING A CERTAIN PERIOD BY      │─42
│ USING ELECTRIC MOTOR                                  │
└─────────────────────────────────────────────────────┘
                          │          ↘ TO FIG. 5
                          ▼
┌─────────────────────────────────────────────────────┐
│ MEASURING CURRENT OF THE ELECTRIC MOTOR              │─43
└─────────────────────────────────────────────────────┘
                          │
                          ▼
┌─────────────────────────────────────────────────────┐
│ COMPARING MEASURED CURRENT WITH THRESHOLD            │─44
└─────────────────────────────────────────────────────┘
                          │
                          ▼
┌─────────────────────────────────────────────────────┐
│ STOPPING ELECTRIC MOTOR IF MEASURED                  │─45
│ CURRENT EXCEEDS THRESHOLD                             │
└─────────────────────────────────────────────────────┘
```

FIG. 4

```
┌─────────────────────────────────────────────────────────┐
│   MEASURING ROTATION SPEED OF ELECTRIC MOTOR            │  ⌐51
│              OR CRANK SHAFT                              │
└─────────────────────────────────────────────────────────┘
                          │
                          ▼
        ┌─────────────────────────────────────┐
        │   CALCULATING TORQUE OF CRANK SHAFT  │  ⌐52
        └─────────────────────────────────────┘
                          │
                          ▼
┌─────────────────────────────────────────────────────────┐
│   COMPARE CALCULATED TORGUE WITH TORQUE THRESHOLD        │  ⌐53
└─────────────────────────────────────────────────────────┘
                          │
                          ▼
┌─────────────────────────────────────────────────────────┐
│   STOPPING ELECTRIC MOTOR IF CALCULATED TORQUE          │  ⌐54
│          EXCEEDS TORQUE THRESHOLD                       │
└─────────────────────────────────────────────────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11064147 B
- US 3870954 A